# EUROPEAN PATENT APPLICATION

(11) **EP 4 749 796 A1**
(43) Date of publication of application: **27.05.2026**
(21) Application number: 25822247.0
(22) Date of filing: 11.06.2025
(51) Int. Cl.: H01M 50/35, H01M 10/6556, H01M 10/613, H01M 10/625, H01M 50/249

(54) **BATTERY DEVICE**

(30) Priority: 13.06.2024 KR 20240077155
(71) Applicant: LG Energy Solution, Ltd., Seoul 07335 (KR)
(72) Inventor: KIM, Jin Hyuk, Daejeon 34122 (KR); LEE, Jae Hyun, Daejeon 34122 (KR)
(74) Representative: Plasseraud IP
(86) International application number: PCT/KR2025/007970
(87) International publication number: WO 2025/258993

(57) **Abstract**

The technical idea of the present disclosure provides a battery device including: a base frame; a first cell assembly provided on a main surface of the base frame and including a plurality of first battery cells stacked in a vertical direction perpendicular to the main surface of the base frame and a first side wall attached to the plurality of first battery cells; and a second cell assembly provided on the main surface of the base frame and including a plurality of second battery cells stacked in the vertical direction, wherein the first side wall includes a venting adjustment part configured to adjust a venting direction of gas discharged from the plurality of second battery cells, and the venting adjustment part includes inclined surfaces provided on a surface of the first side wall facing the plurality of second battery cells and inclined with respect to the vertical direction.

## Description

### [Technical Field]

The present disclosure relates to a battery device.

This application claims the benefit of priority from Korean Patent Application No. 10-2024-0077155, filed on June 13, 2024, the entire contents disclosed therein are incorporated by reference into this disclosure.

### [Background]

Unlike primary batteries, secondary batteries can be charged and discharged multiple times. Secondary batteries are widely used as energy sources for various mobile devices such as handsets, laptops, and wireless vacuum cleaners. Recently, due to improvements in energy density and economies of scale, the manufacturing cost per unit capacity of secondary batteries has dramatically decreased, and the cruising distance of BEVs (battery electric vehicles) has increased to a level equivalent to that of fuel vehicles, so the main use of secondary batteries is shifting from mobile devices to mobility.

As secondary batteries are used in mobility, the demand for safety of secondary batteries is increasing. In the case of an accident such as a fire occurs in a secondary battery used in mobility, it may endanger the life of the driver, so research on technology to improve the safety of secondary batteries is essential.

### [Summary]

### [Technical Problem]

The technical problem to be solved by the present disclosure is to provide a battery device.

### [Technical Solution]

To solve the above-described problem, the technical idea of the present disclosure provides a battery device comprising: a base frame; a first cell assembly provided on a main surface of the base frame and comprising a plurality of first battery cells stacked in a vertical direction perpendicular to the main surface of the base frame and a first side wall attached to the plurality of first battery cells; and a second cell assembly provided on the main surface of the base frame and comprising a plurality of second battery cells stacked in the vertical direction, wherein the first side wall comprises a venting adjustment part configured to adjust a venting direction of gas discharged from the plurality of second battery cells, and the venting adjustment part comprises inclined surfaces provided on a surface of the first side wall facing the plurality of second battery cells and inclined with respect to the vertical direction.

In exemplary embodiments, the inclined surfaces form a first angle with respect to the main surface of the base frame, and the first angle is greater than 90 degrees.

In exemplary embodiments, the inclined surfaces form a first angle with respect to the main surface of the base frame, and the first angle is less than 90 degrees.

In exemplary embodiments, the second cell assembly further comprises a plurality of inter-cell pads, the plurality of inter-cell pads are each disposed between corresponding two second battery cells among the plurality of second battery cells, and the venting adjustment part comprises: first inclined surfaces provided in regions of the first side wall overlapping with the plurality of second battery cells in a horizontal direction and forming a first angle with the main surface of the base frame; and second inclined surfaces provided in regions of the first side wall overlapping with the plurality of inter-cell pads in the horizontal direction and forming a second angle with the main surface of the base frame, wherein the first angle and the second angle are different from each other.

In exemplary embodiments, the first angle is greater than 90 degrees, and the second angle is less than 90 degrees.

In exemplary embodiments, the first angle is less than 90 degrees, and the second angle is greater than 90 degrees.

In exemplary embodiments, the venting adjustment part comprises: first inclined surfaces provided in regions of the first side wall overlapping with a first group of second battery cells among the plurality of second battery cells in a horizontal direction and forming a first angle with the main surface of the base frame; and second inclined surfaces provided in regions of the first side wall overlapping with a second group of second battery cells among the plurality of second battery cells in the horizontal direction and forming a second angle with the main surface of the base frame, wherein the first angle and the second angle are different from each other.

In exemplary embodiments, the first group of second battery cells is above the second group of second battery cells, the first angle is greater than 90 degrees, and the second angle is less than 90 degrees.

In exemplary embodiments, the second cell assembly further comprises: a first group of inter-cell pads disposed between corresponding two second battery cells among the first group of second battery cells; and a second group of inter-cell pads disposed between corresponding two second battery cells among the second group of second battery cells, and the venting adjustment part further comprises: third inclined surfaces provided in regions of the first side wall overlapping with the first group of inter-cell pads in the horizontal direction and forming a third angle with the main surface of the base frame; and fourth inclined surfaces provided in regions of the first side wall overlapping with the second group of inter-cell pads in the horizontal direction and forming a fourth angle with the main surface of the base frame.

In exemplary embodiments, the first group of second battery cells is above the second group of second battery cells, the first angle and the fourth angle are greater than 90 degrees, and the second angle and the third angle are less than 90 degrees.

In exemplary embodiments, the battery device further comprises an adhesive layer attaching each of the plurality of first battery cells to the first side wall and attaching the first cell assembly to the base frame.

In exemplary embodiments, the base frame comprises a cooling channel configured to allow cooling fluid to flow.

In exemplary embodiments, the first cell assembly further comprises: a plurality of first inter-cell pads disposed between corresponding two first battery cells among the plurality of first battery cells; and a first adhesive layer attaching each of the plurality of first battery cells to the first side wall, and the second cell assembly further comprises: a plurality of second inter-cell pads disposed between corresponding two second battery cells among the plurality of second battery cells; a second side wall attached to the plurality of second battery cells; and a second adhesive layer attaching each of the plurality of second battery cells to the second side wall.

### [Advantageous Effects]

According to the battery device according to exemplary embodiments of the present disclosure, the cell assembly may include battery cells stacked in the vertical direction. When the cell assembly includes battery cells stacked in the vertical direction, the cell assembly has a relatively high dimension in the vertical direction, so it is possible to provide a battery device having high space utilization while having a high dimension in the vertical direction. In addition, since the number of battery cells included in the cell assembly can be adjusted according to the dimension in the vertical direction of the battery device, it is possible to provide a battery device having high space utilization while having various form factors.

According to the battery device according to exemplary embodiments of the present disclosure, the cell assembly has a side wall supporting battery cells stacked in the vertical direction, and the side wall of the cell assembly may include a venting adjustment part configured to adjust the venting direction and/or venting angle of gas discharged from the battery cells of another cell assembly. Since the gas discharged from the battery cells is quickly vented along the intended path by the venting adjustment part, it is possible to prevent high-temperature gas from stagnating between adjacent cell assemblies, and ultimately improve the safety and reliability of the battery device.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a layout view illustrating a battery device according to exemplary embodiments of the present disclosure.
FIG. 2 is a cross-sectional view of a battery device taken along line II-II' of FIG. 1.
FIG. 3 is a cross-sectional view of a battery device taken along line III-III' of FIG. 1.
FIG. 4 is an enlarged view illustrating a region indicated by "IV" in FIG. 2.
FIG. 5 is a cross-sectional view illustrating a portion of a battery device according to exemplary embodiments of the present disclosure.
FIG. 6 is a cross-sectional view illustrating a portion of a battery device according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

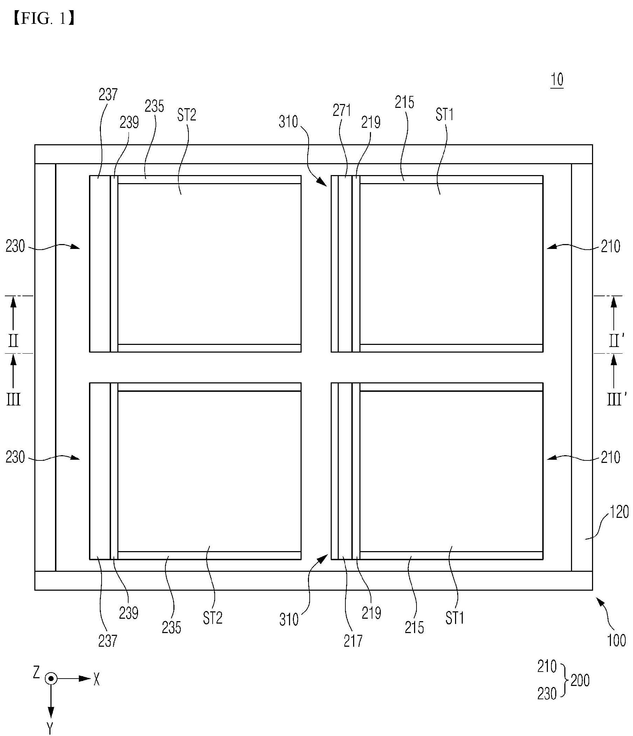

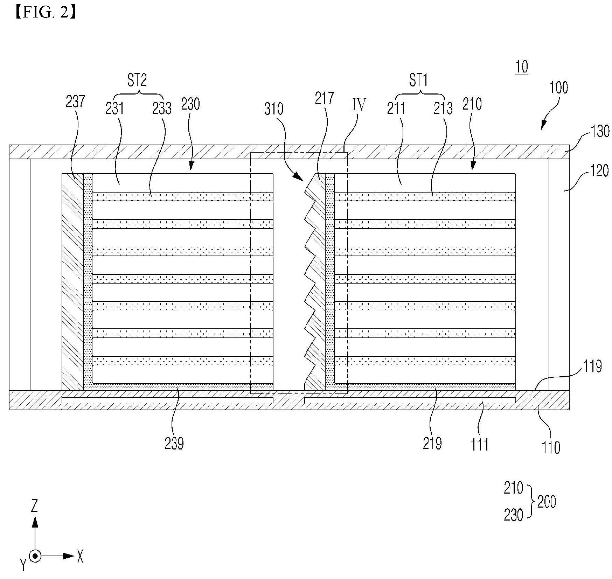

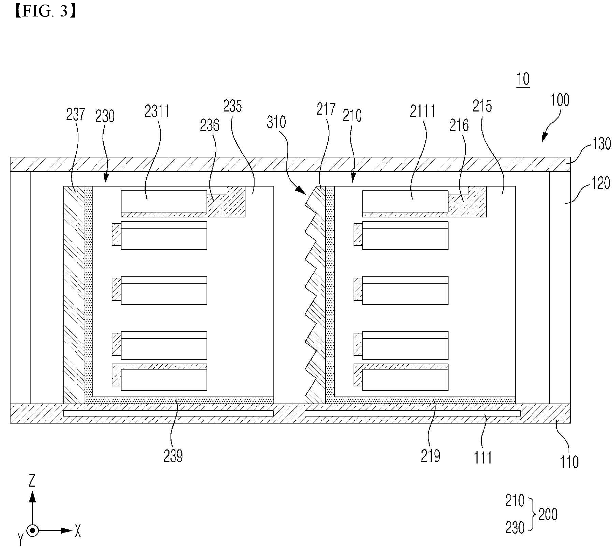

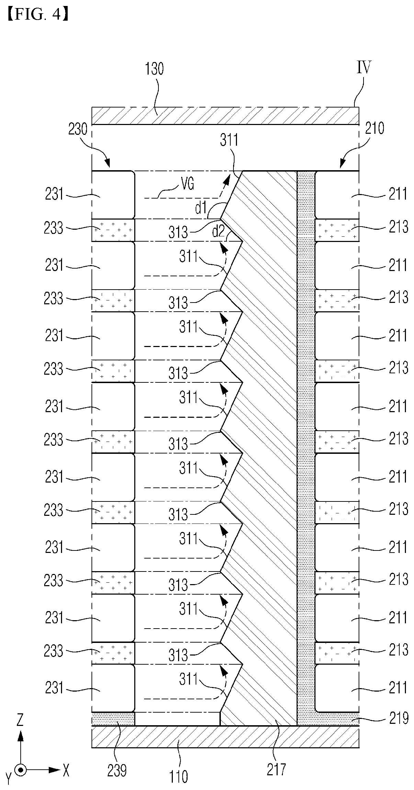

FIG. 1 is a layout view illustrating a battery device 10 according to exemplary embodiments of the present disclosure. FIG. 2 is a cross-sectional view of a battery device 10 taken along line II-II' of FIG. 1. FIG. 3 is a cross-sectional view of a battery device 10 taken along line III-III' of FIG. 1. FIG. 4 is an enlarged view illustrating a region indicated by "IV" in FIG. 2.

Referring to FIGS. 1 to 4, the battery device 10 may include a housing 100 and a plurality of cell assemblies 200. The battery device 10 may correspond to a battery pack or a battery module.

The housing 100 may provide an interior space accommodating the plurality of cell assemblies 200. The plurality of cell assemblies 200 may be accommodated in the interior space of the housing 100. The housing 100 may include a base frame 110, a side frame 120, and a top frame 130.

The base frame 110 may include a main surface 119 supporting the plurality of cell assemblies 200. The main surface 119 of the base frame 110 may be a plane extending in a first horizontal direction (for example, X direction) and a second horizontal direction (for example, Y direction), and may be perpendicular to a vertical direction (for example, Z direction).

The base frame 110 may include a cooling channel 111 configured to allow cooling fluid to flow. Cooling fluid provided from the exterior of the base frame 110 may be supplied to an inlet of the cooling channel 111, flow along the cooling channel 111, and be discharged to the exterior through an outlet of the cooling channel 111. While the cooling fluid flows along the cooling channel 111 of the base frame 110, cooling of the plurality of cell assemblies 200 may be performed. The cooling fluid may include a coolant and/or a refrigerant.

The side frame 120 may be coupled to the base frame 110. The side frame 120 may extend along the perimeter of the base frame 110, and may surround the plurality of cell assemblies 200.

The top frame 130 may be fastened on the side frame 120 to cover the plurality of cell assemblies 200. The top frame 130 may have a flat plate form extending in a first horizontal direction (for example, X direction) and a second horizontal direction (for example, Y direction).

The plurality of cell assemblies 200 may be mounted on the base frame 110, and may be spaced apart from each other on the base frame 110. The plurality of cell assemblies 200 may each be attached to the base frame 110 by a thermally conductive adhesive layer. The thermally conductive adhesive layer may include a thermal interface material and/or a thermal resin.

The plurality of cell assemblies 200 may each include a plurality of battery cells and a plurality of inter-cell pads.

Each individual battery cell is a lithium-ion battery, which is a basic unit of a secondary battery. Each individual battery cell may include an electrode assembly, an electrolyte, and a cell case. The electrode assembly built into the cell case may include a positive electrode, a negative electrode, and a separator interposed between the positive electrode and the negative electrode. The electrode assembly may be any one of a jelly-roll type and a stack-type depending on an assembly form. The jelly-roll type electrode assembly may include a winding structure of a positive electrode, a negative electrode, and a separator interposed therebetween. The stack-type electrode assembly may include a plurality of positive electrodes, a plurality of negative electrodes, and a plurality of separators interposed therebetween that are sequentially stacked. The positive electrode may include a positive electrode current collector and a positive electrode active material. The negative electrode may include a negative electrode current collector and a negative electrode active material.

Each individual battery cell may correspond to a pouch-type battery cell, a cylindrical battery cell, or a prismatic battery cell. The electrode assembly of the pouch-type battery cell is built into a pouch case including an aluminum laminate sheet. The electrode assembly of the cylindrical battery cell is built into a cylindrical metal can. The electrode assembly of the prismatic battery cell is built into a prismatic metal can.

The plurality of battery cells provided in each individual cell assembly 200 may be connected in series and/or in parallel. As an example, the plurality of battery cells may be connected in series with each other. As an example, the plurality of battery cells may be connected in parallel with each other. As an example, when defining a set of two or more battery cells connected in parallel with each other as a bank, one bank composed of two or more battery cells connected in parallel with each other and another bank composed of two or more battery cells connected in parallel with each other may be connected in series.

In exemplary embodiments, the plurality of battery cells provided in the cell assembly 200 may be stacked with each other in a vertical direction (for example, Z direction) perpendicular to the main surface 119 of the base frame 110. Each individual battery cell may extend in a first horizontal direction (for example, X direction) and a second horizontal direction (for example, Y direction). An electrode lead may be provided at least one of both ends of each individual battery cell in the second horizontal direction (for example, Y direction). Electrode leads of battery cells neighboring in the vertical direction (for example, Z direction) among the plurality of battery cells may be electrically and physically connected to each other.

Each individual cell assembly 200 may include a busbar frame connected to side portions of the plurality of battery cells. A busbar frame may be disposed at each of both ends of the cell assembly 200 in the second horizontal direction (for example, Y direction). The busbar frame may support busbars and electrode leads of the battery cells. The busbars may be electrically and physically connected to at least one of the electrode leads of the plurality of battery cells. The busbars may be coupled to at least one of the electrode leads of the plurality of battery cells by welding.

The plurality of inter-cell pads may be arranged in a vertical direction (for example, Z direction). The plurality of inter-cell pads may each be disposed between corresponding two battery cells among the plurality of battery cells. At least one battery cell may be disposed between two adjacent inter-cell pads. In exemplary embodiments, the cell assembly 200 may have a stacked structure in which one battery cell and one inter-cell pad are alternately and repeatedly arranged. Each individual inter-cell pad may extend in a first horizontal direction (for example, X direction) and a second horizontal direction (for example, Y direction). Each individual inter-cell pad may be attached to a corresponding battery cell by an adhesive member such as double-sided tape or adhesive.

Each individual inter-cell pad is disposed between corresponding two battery cells, and may support the corresponding two battery cells in a vertical direction (for example, Z direction). Each individual inter-cell pad supports the corresponding two battery cells in a vertical direction (for example, Z direction), and may suppress or prevent deformation of the corresponding two battery cells. Each individual inter-cell pad may have elasticity. When the thickness of a battery cell increases due to swelling of the battery cell, the inter-cell pad may be elastically deformed to absorb and disperse external forces acting during swelling of the battery cell.

Each individual inter-cell pad may include a material having low thermal conductivity. Each individual inter-cell pad is disposed between battery cells, and may be configured to prevent or suppress thermal propagation between battery cells.

In exemplary embodiments, each individual inter-cell pad may include polyurethane, silicone, or a combination thereof.

The plurality of cell assemblies 200 may include a first cell assembly 210 and a second cell assembly 230.

The first cell assembly 210 may include a first stacked body ST1 including a plurality of first battery cells 211 and a plurality of first inter-cell pads 213, a first busbar frame 215, a first side wall 217, and a first adhesive layer 219. The first stacked body ST1 may include a plurality of first battery cells 211 stacked in a vertical direction (for example, Z direction) and a plurality of first inter-cell pads 213 stacked in a vertical direction (for example, Z direction). The plurality of first inter-cell pads 213 may each be disposed between first battery cells 211. The plurality of first inter-cell pads 213 may support the first battery cells 211 and suppress or prevent thermal propagation between the first battery cells 211. The first busbar frame 215 may be connected to a side portion of the first stacked body ST1 in a second horizontal direction (for example, Y direction), and may support a busbar 216 coupled to at least one of electrode leads 2111 of the plurality of first battery cells 211.

The first side wall 217 may be attached to a side portion of the first stacked body ST1 in a first horizontal direction (for example, X direction), and may support the first stacked body ST1. The first side wall 217 may generally have a flat plate form extending in a second horizontal direction (for example, Y direction) and a vertical direction (for example, Z direction).

The first adhesive layer 219 may attach the first stacked body ST1 to the first side wall 217 and the base frame 110. A portion of the first adhesive layer 219 is interposed between the first stacked body ST1 and the first side wall 217, and may attach the first stacked body ST1 to the first side wall 217. A portion of the first adhesive layer 219 may extend along side surfaces of the plurality of first battery cells 211 and side surfaces of the plurality of first inter-cell pads 213. Another portion of the first adhesive layer 219 is interposed between the first stacked body ST1 and the base frame 110 and may attach the first stacked body ST1 to the base frame 110. The other portion of the first adhesive layer 219 may directly contact the lowermost first battery cell 211 among the plurality of first battery cells 211. The first adhesive layer 219 may be configured to thermally couple the plurality of first battery cells 211 to the first side wall 217. Heat generated in the plurality of first battery cells 211 may be transferred to the first side wall 217 through the first adhesive layer 219, and may be dispersed through the first side wall 217. The first adhesive layer 219 may include a thermal interface material and/or a thermal resin.

The second cell assembly 230 may include a second stacked body ST2 including a plurality of second battery cells 231 and a plurality of second inter-cell pads 233, a second busbar frame 235, a second side wall 237, and a second adhesive layer 239. The second stacked body ST2 may include a plurality of second battery cells 231 stacked in a vertical direction (for example, Z direction) and a plurality of second inter-cell pads 233 stacked in a vertical direction (for example, Z direction). The plurality of second inter-cell pads 233 may each be disposed between second battery cells 231. The plurality of second inter-cell pads 233 may support the second battery cells 231 and suppress or prevent thermal propagation between the second battery cells 231. The second busbar frame 235 may be connected to a side portion of the second stacked body ST2 in a second horizontal direction (for example, Y direction), and may support a busbar 236 coupled to at least one of electrode leads 2311 of the plurality of second battery cells 231.

The second side wall 237 may be attached to a side portion of the second stacked body ST2 in a first horizontal direction (for example, X direction), and may support the second stacked body ST2. The second side wall 237 may generally have a flat plate form extending in a second horizontal direction (for example, Y direction) and a vertical direction (for example, Z direction).

The second adhesive layer 239 may attach the second stacked body ST2 to the second side wall 237 and the base frame 110. A portion of the second adhesive layer 239 is interposed between the second stacked body ST2 and the second side wall 237, and may attach the second stacked body ST2 to the second side wall 237. A portion of the second adhesive layer 239 may extend along side surfaces of the plurality of second battery cells 231 and side surfaces of the plurality of second inter-cell pads 233. Another portion of the second adhesive layer 239 is interposed between the second stacked body ST2 and the base frame 110 and may attach the second stacked body ST2 to the base frame 110. The other portion of the second adhesive layer 239 may directly contact the lowermost second battery cell 231 among the plurality of second battery cells 231. The second adhesive layer 239 may be configured to thermally couple the plurality of second battery cells 231 to the second side wall 237. Heat generated in the plurality of second battery cells 231 may be transferred to the second side wall 237 through the second adhesive layer 239, and may be dispersed through the second side wall 237. The second adhesive layer 239 may include a thermal interface material and/or a thermal resin.

The first side wall 217 of the first cell assembly 210 may face the second stacked body ST2 of the second cell assembly 230. The first side wall 217 may include a venting adjustment part 310 provided on a side portion facing the second stacked body ST2 of the second cell assembly 230 and configured to adjust the venting direction and/or venting angle of gas VG discharged from the plurality of second battery cells 231. The venting adjustment part 310 may be configured to guide the gas VG discharged from the plurality of second battery cells 231 in a specific direction. For example, the venting adjustment part 310 may guide the gas VG discharged from the plurality of second battery cells 231 upward or downward. The venting adjustment part 310 may include an inclined surface provided on a surface of the first side wall 217. The inclined surface provided on the first side wall 217 may extend inclined with respect to a vertical direction (for example, Z direction). The gas VG discharged from the plurality of second battery cells 231 may flow upward or downward along the inclined surface of the first side wall 217. When viewed in cross-section, the profile of the inclined surface may include a straight line, a curve, or a combination thereof.

In exemplary embodiments, the venting adjustment part 310 of the first side wall 217 may include an inclined surface extending upward and configured to guide the gas VG discharged from the plurality of second battery cells 231 upward. When the inclined surface extends upward, the angle between the inclined surface and the main surface 119 of the base frame 110 may be greater than 90 degrees. When the inclined surface extends upward, the distance between the inclined surface and the second cell assembly 230 may increase as it moves away from the base frame 110.

In exemplary embodiments, the venting adjustment part 310 of the first side wall 217 may include an inclined surface extending downward and configured to guide the gas VG discharged from the plurality of second battery cells 231 downward. When the inclined surface extends downward, the angle between the inclined surface and the main surface 119 of the base frame 110 may be less than 90 degrees. When the inclined surface extends downward, the distance between the inclined surface and the second cell assembly 230 may decrease as it moves away from the base frame 110.

In exemplary embodiments, the venting adjustment part 310 of the first side wall 217 may include first inclined surfaces 311 provided in first regions of the first side wall 217 overlapping with the plurality of second battery cells 231 in a first horizontal direction (for example, X direction) and second inclined surfaces 313 provided in second regions of the first side wall 217 overlapping with the plurality of second inter-cell pads 233 in a first horizontal direction (for example, X direction). The first inclined surfaces 311 form a first angle d1 with respect to the main surface 119 of the base frame 110, and the second inclined surfaces 313 may form a second angle d2 different from the first angle d1 with respect to the main surface 119 of the base frame 110. The first inclined surfaces 311 may extend upward, and the first angle d1 may be greater than 90 degrees. The distance between each individual first inclined surface 311 and the corresponding second battery cell 231 may increase as it moves away from the base frame 110. The second inclined surfaces 313 may extend downward, and the second angle d2 may be less than 90 degrees. The distance between each individual second inclined surface 313 and the corresponding second inter-cell pad 233 may decrease as it moves away from the base frame 110. Since the first inclined surfaces 311 provided in the first regions of the first side wall 217 overlapping with the plurality of second battery cells 231 in a first horizontal direction (for example, X direction) extend upward, the gas VG discharged from the plurality of second battery cells 231 may flow upward toward the top frame 130.

### (second embodiment)

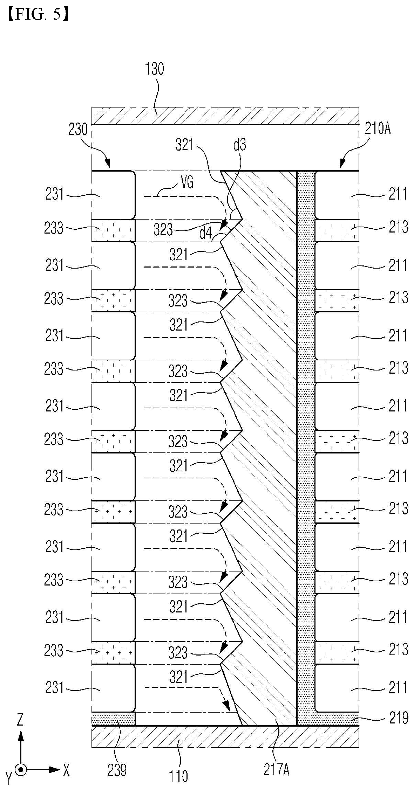

FIG. 5 is a cross-sectional view illustrating a portion of a battery device according to exemplary embodiments of the present disclosure. Hereinafter, the battery device of FIG. 5 will be described with particular emphasis on differences from the battery device 10 described with reference to FIGS. 1 to 4.

Referring to FIG. 5, in the first cell assembly 210A, the venting adjustment part of the first side wall 217A may include first inclined surfaces 321 provided in first regions of the first side wall 217A overlapping with the plurality of second battery cells 231 in a first horizontal direction (for example, X direction) and second inclined surfaces 323 provided in second regions of the first side wall 217A overlapping with the plurality of second inter-cell pads 233 in a first horizontal direction (for example, X direction). The first inclined surfaces 321 form a first angle d3 with respect to the main surface 119 of the base frame 110, and the second inclined surfaces 323 may form a second angle d4 different from the first angle d3 with respect to the main surface 119 of the base frame 110. The first inclined surfaces 321 may extend downward, and the first angle d3 may be less than 90 degrees. The distance between each individual first inclined surface 321 and the corresponding second battery cell 231 may decrease as it moves away from the base frame 110. The second inclined surfaces 323 may extend upward, and the second angle d4 may be greater than 90 degrees. The distance between each individual second inclined surface 323 and the corresponding second inter-cell pad 233 may increase as it moves away from the base frame 110. Since the first inclined surfaces 321 provided in the first regions of the first side wall 217A overlapping with the plurality of second battery cells 231 in a first horizontal direction (for example, X direction) extend downward, the gas VG discharged from the plurality of second battery cells 231 may flow downward toward the base frame 110.

### (third embodiment)

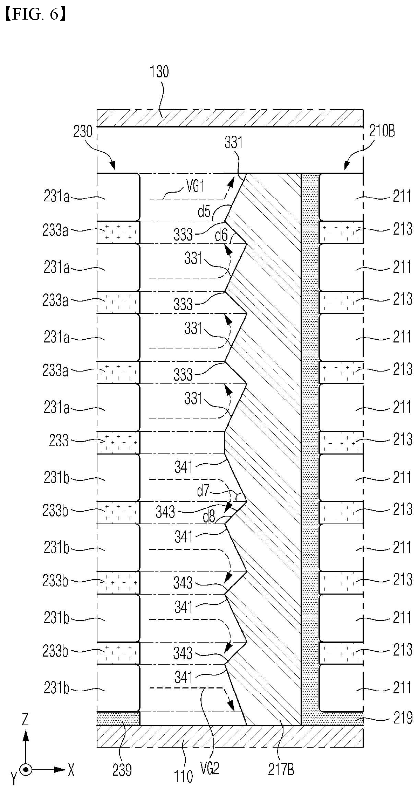

FIG. 6 is a cross-sectional view illustrating a portion of a battery device according to exemplary embodiments of the present disclosure. Hereinafter, the battery device of FIG. 6 will be described with particular emphasis on differences from the battery device 10 described with reference to FIGS. 1 to 4.

Referring to FIG. 6, the second cell assembly 230 may include a first group of second battery cells 231a, a second group of second battery cells 231b, a first group of second inter-cell pads 233a, and a second group of second inter-cell pads 233b. In the second assembly 210B, the first group of second battery cells 231a may be provided above the second group of second battery cells 231b. The first group of second inter-cell pads 233a may each be provided between corresponding two second battery cells 231 among the first group of second battery cells 231a. The second group of second inter-cell pads 233b may each be provided between corresponding two second battery cells 231 among the second group of second battery cells 231b.

In the first cell assembly 210B, the venting adjustment part of the first side wall 217B may include first inclined surfaces 331 provided in first regions of the first side wall 217B overlapping with the first group of second battery cells 231a in a first horizontal direction (for example, X direction), and second inclined surfaces 333 provided in first regions of the first side wall 217B overlapping with the first group of second inter-cell pads 233a in a first horizontal direction (for example, X direction). The first inclined surfaces 331 form a first angle d5 with respect to the main surface 119 of the base frame 110, and the second inclined surfaces 333 may form a second angle d6 different from the first angle d5 with respect to the main surface 119 of the base frame 110. The first inclined surfaces 331 may extend upward, and the first angle d5 may be greater than 90 degrees. The second inclined surfaces 333 may extend downward, and the second angle d6 may be less than 90 degrees. Since the first inclined surfaces 331 provided in the first regions of the first side wall 217B overlapping with the first group of second battery cells 231a extend upward, the gas VG1 discharged from the first group of second battery cells 231a may flow upward toward the top frame 130.

In the first cell assembly 210B, the venting adjustment part of the first side wall 217B may include third inclined surfaces 341 provided in third regions of the first side wall 217B overlapping with the second group of second battery cells 231b in a first horizontal direction (for example, X direction), and fourth inclined surfaces 343 provided in fourth regions of the first side wall 217B overlapping with the second group of second inter-cell pads 233b in a first horizontal direction (for example, X direction). The third inclined surfaces 341 form a third angle d7 with respect to the main surface 119 of the base frame 110, and the fourth inclined surfaces 343 may form a fourth angle d8 different from the third angle d7 with respect to the main surface 119 of the base frame 110. The third inclined surfaces 341 may extend downward, and the third angle d7 may be less than 90 degrees. The fourth inclined surfaces 343 may extend upward, and the fourth angle d8 may be greater than 90 degrees. Since the third inclined surfaces 341 provided in the regions of the first side wall 217B overlapping with the second group of second battery cells 231b extend downward, the gas VG2 discharged from the second group of second battery cells 231b may flow downward toward the base frame 110.

According to exemplary embodiments, the venting adjustment part of the first side wall 217B may guide the flow of gas VG1 so that the gas VG1 discharged from the first group of second battery cells 231a provided relatively on the upper side flows upward, and may guide the flow of gas VG2 so that the gas VG2 discharged from the second group of second battery cells 231b provided relatively on the lower side flows downward.

In a general battery device, the cell assembly is composed of battery cells stacked in a horizontal direction. The greater the difference between the dimension in the vertical direction of the battery device and the dimension in the vertical direction of the battery cell, the lower the space utilization of the battery device.

According to the battery device according to exemplary embodiments of the present disclosure, the cell assembly may include battery cells stacked in the vertical direction. When the cell assembly includes battery cells stacked in the vertical direction, the cell assembly has a relatively high dimension in the vertical direction, so it is possible to provide a battery device having high space utilization while having a high dimension in the vertical direction. In addition, since the number of battery cells included in the cell assembly can be adjusted according to the dimension in the vertical direction of the battery device, it is possible to provide a battery device having high space utilization while having various form factors.

According to the battery device according to exemplary embodiments of the present disclosure, the cell assembly has a side wall supporting battery cells stacked in the vertical direction, and the side wall of the cell assembly may include a venting adjustment part configured to adjust the venting direction and/or venting angle of gas discharged from the battery cells of another cell assembly. Since the gas discharged from the battery cells is quickly vented along the intended path by the venting adjustment part, it is possible to prevent high-temperature gas from stagnating between adjacent cell assemblies, and ultimately improve the safety and reliability of the battery device.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A battery device, comprising:
a base frame;
a first cell assembly provided on a main surface of the base frame and comprising a plurality of first battery cells stacked in a vertical direction perpendicular to the main surface of the base frame and a first side wall attached to the plurality of first battery cells; and
a second cell assembly provided on the main surface of the base frame and comprising a plurality of second battery cells stacked in the vertical direction,
wherein the first side wall comprises a venting adjustment part configured to adjust a venting direction of gas discharged from the plurality of second battery cells, and
wherein the venting adjustment part comprises inclined surfaces provided on a surface of the first side wall facing the plurality of second battery cells and inclined with respect to the vertical direction.

2. The battery device of claim 1, wherein the inclined surfaces form a first angle with respect to the main surface of the base frame, and the first angle is greater than 90 degrees.

3. The battery device of claim 1, wherein the inclined surfaces form a first angle with respect to the main surface of the base frame, and the first angle is less than 90 degrees.

4. The battery device of claim 1, wherein the second cell assembly further comprises a plurality of inter-cell pads,
wherein the plurality of inter-cell pads are each disposed between corresponding two second battery cells among the plurality of second battery cells, and
wherein the venting adjustment part comprises:
first inclined surfaces provided in regions of the first side wall overlapping with the plurality of second battery cells in a horizontal direction and forming a first angle with the main surface of the base frame; and
second inclined surfaces provided in regions of the first side wall overlapping with the plurality of inter-cell pads in the horizontal direction and forming a second angle with the main surface of the base frame,
wherein the first angle and the second angle are different from each other.

5. The battery device of claim 4, wherein the first angle is greater than 90 degrees, and the second angle is less than 90 degrees.

6. The battery device of claim 4, wherein the first angle is less than 90 degrees, and the second angle is greater than 90 degrees.

7. The battery device of claim 1, wherein the venting adjustment part comprises:
first inclined surfaces provided in regions of the first side wall overlapping with a first group of second battery cells among the plurality of second battery cells in a horizontal direction and forming a first angle with the main surface of the base frame; and
second inclined surfaces provided in regions of the first side wall overlapping with a second group of second battery cells among the plurality of second battery cells in the horizontal direction and forming a second angle with the main surface of the base frame,
wherein the first angle and the second angle are different from each other.

8. The battery device of claim 7, wherein the first group of second battery cells is above the second group of second battery cells, the first angle is greater than 90 degrees, and the second angle is less than 90 degrees.

9. The battery device of claim 7, wherein the second cell assembly further comprises:
a first group of inter-cell pads disposed between corresponding two second battery cells among the first group of second battery cells; and
a second group of inter-cell pads disposed between corresponding two second battery cells among the second group of second battery cells, and
wherein the venting adjustment part further comprises:
third inclined surfaces provided in regions of the first side wall overlapping with the first group of inter-cell pads in the horizontal direction and forming a third angle with the main surface of the base frame; and
fourth inclined surfaces provided in regions of the first side wall overlapping with the second group of inter-cell pads in the horizontal direction and forming a fourth angle with the main surface of the base frame.

10. The battery device of claim 9, wherein the first group of second battery cells is above the second group of second battery cells, the first angle and the fourth angle are greater than 90 degrees, and the second angle and the third angle are less than 90 degrees.

11. The battery device of claim 1, further comprising an adhesive layer attaching each of the plurality of first battery cells to the first side wall and attaching the first cell assembly to the base frame.

12. The battery device of claim 1, wherein the base frame comprises a cooling channel configured to allow cooling fluid to flow.

13. The battery device of claim 1, wherein the first cell assembly further comprises:
a plurality of first inter-cell pads disposed between corresponding two first battery cells among the plurality of first battery cells; and
a first adhesive layer attaching each of the plurality of first battery cells to the first side wall, and
wherein the second cell assembly further comprises:
a plurality of second inter-cell pads disposed between corresponding two second battery cells among the plurality of second battery cells;
a second side wall attached to the plurality of second battery cells; and
a second adhesive layer attaching each of the plurality of second battery cells to the second side wall.
